Europäisches Patentamt

European Patent Office

Office européen des brevets

(19)

(11) Veröffentlichungsnummer: **0 095 662**
**B1**

(12) **EUROPÄISCHE PATENTSCHRIFT**

(45) Veröffentlichungstag der Patentschrift:
02.10.85

(21) Anmeldenummer: 83104921.8

(22) Anmeldetag: 18.05.83

(51) Int. Cl.⁴: **G 21 C 1/06**, G 21 C 13/02

(54) Hochtemperatur-Kernreaktor mit vom Reaktorbehälter trennbarer Heissgasrohrleitung.

(30) Priorität: 01.06.82 DE 3220610

(43) Veröffentlichungstag der Anmeldung:
07.12.83 Patentblatt 83/49

(45) Bekanntmachung des Hinweises auf die Patenterteilung:
02.10.85 Patentblatt 85/40

(84) Benannte Vertragsstaaten:
DE FR GB

(56) Entgegenhaltungen:
EP - A - 0 039 016
DE - A - 2 637 165
DE - A - 2 913 461
DE - A - 3 038 240
FR - A - 1 473 406
FR - A - 2 214 938
GB - A - 1 086 052
US - A - 3 107 419

(73) Patentinhaber: INTERATOM Gesellschaft mit
beschränkter Haftung, Friedrich-Ebert-Strasse,
D-5060 Bergisch Gladbach 1 (DE)

(72) Erfinder: Ullrich, Manfred, Kippekausen 115,
D-5060 Bergisch-Gladbach (DE)
Erfinder: Sahler, Rainer, Annabergstrasse 5,
D-5000 Köln 80 (DE)

(74) Vertreter: Mehl, Ernst, Dipl.-Ing. et al, Postfach 22 01 76,
D-8000 München 22 (DE)

## Beschreibung

Die vorliegende Erfindung betrifft einen Hochtemperatur-Kernreaktor nach dem Oberbegriff des ersten Anspruchs. Sie dient der Verbesserung einer Kernenergieanlage derjenigen Art, wie sie in der EP-A-0 039 016 beschrieben worden ist und auf die hier für die Beschreibung des allgemeinen Aufbaues einer solchen Anlage Bezug genommen wird. In einer Alternativausführung war dort bereits die Möglichkeit gezeigt worden, einen Kernreaktor der beschriebenen Art unter Einhaltung eines gewissen Zwischenraumes in einem Stahldruckbehälter unterzubringen, wie er auch für die bekannten Druckwasserreaktoren benutzt wird und der ein in seiner Technik völlig beherrschtes Bauteil darstellt. In der angezogenen Veröffentlichung war davon ausgegangen worden, daß die Verbindung des eigentlichen Kernbehälters zu der die in ihm erhitzten Gase fortleitenden Heißgasrohrleitung als einfache Steckverbindungen ausgeführt werden würden. Neuere Überlegungen haben dazu geführt, daß eine einfachere Gasführung und dazu eine festere Verbindung der beiden Bauteile gefordert wird unter Beibehaltung der Möglichkeit, dieselben zu Reparaturzwecken trennen zu können.

Aufgabe der vorliegenden Erfindung ist die Ausgestaltung der Verbindung zwischen Reaktorbehälter und Heißgasrohrleitung derart, daß die Verbindung zwischen beiden ohne besondere Schwierigkeiten mittels fernbedienbarer Werkzeuge gelöst werden kann, wobei zugleich zur Erleichterung der Demontage und späteren erneuten Montage ein Spalt zwischen beiden Bauteilen hergestellt wird.

Die Lösung dieser Aufgabe erfolgt durch die im kennzeichnenden Teil des ersten Anspruchs angegebenen Mittel. Es entfällt die Notwendigkeit des Ausbaues von Teilen im Ringspalt zwischen Außen- und Innenbehälter, der nur schwer durchzuführen wäre. Da die Heißgasrohrleitung zum Ausgleich für die zwischen Normal- und Betriebstemperatur auftretenden Wärmedehnungen mit Vorrichtungen zum Ausgleich derselben, z. B. mit Wellrohrkompensatoren versehen ist, muß die hier geforderte Vorrichtung nur eine zur Überwindung des Verformungswiderstandes dieser Kompensatoren ausreichende Kraft aufbringen, um den Flansch der Rohrleitung von demjenigen im Innenbehälter um das erforderliche, nur geringe Maß zu entfernen.

Die im zweiten Anspruch vorgeschlagene Ausgestaltung der Erfindung dient einer exakteren Führung der die beiden Bauteile verbindenden Schrauben zur Erleichterung eines erneuten Zusammenbaus, die nur gewährleistet ist, wenn die Schrauben in beiden Flanschen in Gewinde geführt werden. Hierzu müssen die mit Gewinde versehenen Teile der Flansche um ein genaues Vielfaches der Gewindeganghöhe von einander entfernt sein, was sich durch die nachgiebige Anordnung des einen Gewindes ohne weiteres bewerkstelligen läßt.

Ein Ausführungsbeispiel der Erfindung ist in der Zeichnung dargestellt, und zwar zeigt

Fig. 1 den für das Verständnis der Erfindung notwendigen unteren Teil der angesprochenen Kernenergieanlage,

Fig. 2 in vergrößertem Maßstab die Einzelheit X der Fig. 1 und

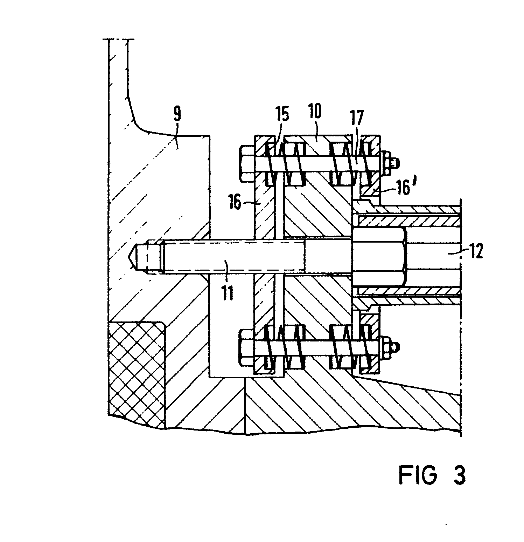

Fig. 3 in abermals vergrößertem Maßstab die Einzelheit Y der Fig. 2.

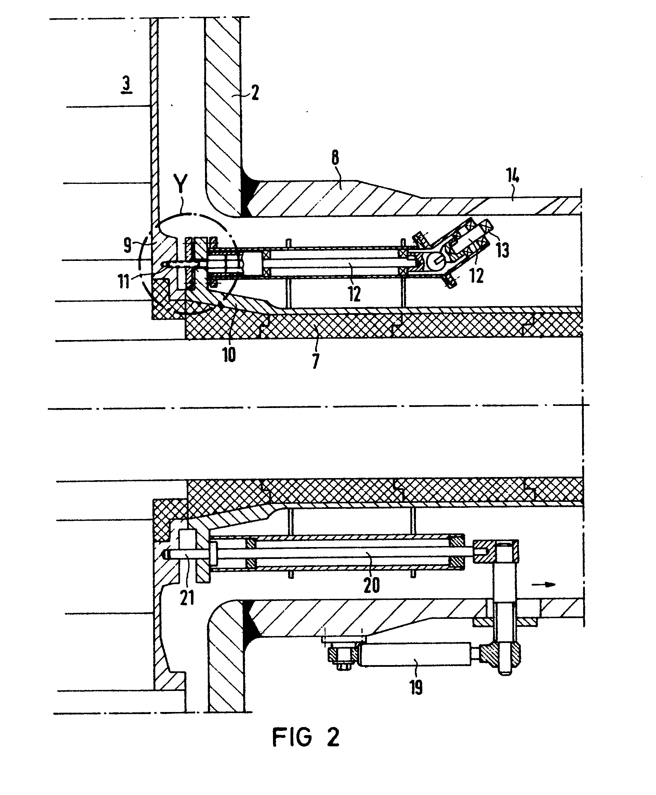

Die Kernenergieanlage besteht unter anderem aus einem innerhalb einer Betonabschirmung 1 angeordneten äußeren stählernen Druckbehälter 2 innerhalb dessen und unter Freilassung eines Ringspaltes ein aus Graphit und Kohlestein mit metallischer Hülle aufgebauter Innenbehälter 3 angeordnet ist, der den eigentlichen Kernbehälter darstellt; dieser enthält einen Kernverband 4 aus beispielsweise kugelförmigen Brennelementen, der von oben nach unten von einem als Wärmeübertragungsmittel dienenden Gas, beispielsweise Helium, durchströmt wird, das sich dabei erhitzt. Über zahlreiche im Behälterboden angebrachte kleine Bohrungen 5 gelangt das Gas schließlich in einen Sammelraum 6, von dem aus es über eine Heißgasrohrleitung 7 hier nicht dargestellten wärmeverbrauchenden Teilen der Anlage, beispielsweise einem Wärmetauscher zugeführt wird. Die Heißgasrohrleitung 7 ist, ebenfalls unter Beibelassung eines Ringspaltes, in einem am Außenbehälter 2 angeschweißten Stutzen 8 untergebracht, wobei der Stutzen Teil eines den Druckbehälter 2 mit einem hier nicht dargestellten Komponentenbehälter (z. B. zur Aufnahme von Wärmetauschern) dicht verbindenden Zwischenbehälters ist. Innenbehälter 3 und Heißgasrohrleitung 7 sind mit zueinander passenden Flanschen 9 bzw. 10 versehen, die im Betrieb durch über den Umfang verteilte Schrauben 11 zusammengehalten werden. Die Fig. 2 zeigt deutlicher, daß die Schraube 11 mittels einer abgeknickt geführten Gelenkwelle 12 in der gewünschten Richtung in Drehung versetzt werden kann, die an ihrem Ende 13 so geformt und auf eine im Stutzen 8 zu diesem Zweck angelegte, im Betrieb durch einen hier nicht dargestellten Deckel verschlossene Öffnung ausgerichtet ist, daß von außerhalb des Druckbehälters 2 ein entsprechendes, hier ebenfalls nicht dargestelltes fernbedientes Werkzeug angesetzt werden kann. Im Behälterflansch 9 greifen die Schrauben 11 in eine entsprechende, mit Gewinde versehene Sackbohrung, während sie im Leitungsflansch 10 mit Spiel in einer einfachen Durchgangsbohrung geführt sind. Um eine exakte Ausrichtung der Schrauben 11 zu gewährleisten, ist jeweils ein beidseits des Flansches 10 angeordneter, gegenüber letzterem über Federn 15 gelagerter Doppelring vorhanden, dessen Hälften 16, 16' mit Schrauben 17 starr miteinander verbunden sind. Der zwischen den beiden Flanschen gelegene Ring 16 ist mit einer zur Schraube 11 passenden Gewindebohrung versehen. Bedingt durch die Nachgiebigkeit der Fe-

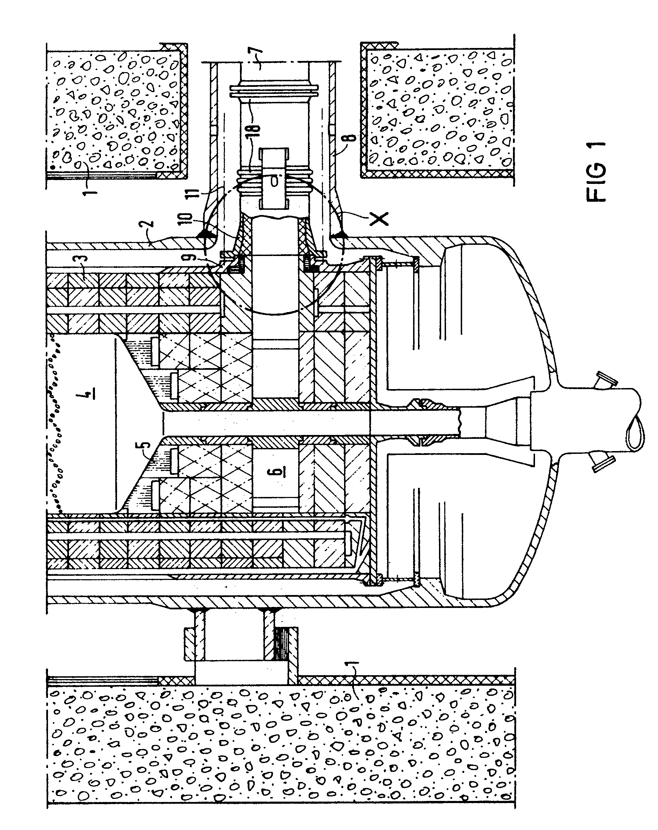

dern 15, stellt sich zwischen dem Flansch 9 und dem Ring 16 selbsttätig ein Abstand ein, der ein Mehrfaches der Gewindeganghöhe der Schraube 11 beträgt, so daß letztere bei Montagearbeiten nicht nur exakt geführt wird, sondern auch ohne weiteres in das zu treffende Gewinde im Flansch 9 einläuft. Die Heißgasrohrleitung 7 ist (siehe Fig. 1) zum Ausgleich der zwischen dem Ruhezustand bei Umgebungstemperatur und dem Betriebszustand bei ca. 900°C (innen) bzw. ca. 300°C (metallisches Außenrohr und Kompensatoren) auftretenden Wärmedehnungen mit Wellrohrkompensatoren 18 versehen, die einer Axialverschiebung des Leitungsflansches 10 weg vom Behälterflansch 9 einen definierten Widerstand entgegensetzen. Zur Überwindung dieser Kraft sind, ebenfalls gleichmäßig über den Umfang des Stutzens 8 verteilt auf dessen Außenseite und somit für Wartung und Reparatur leichter zugänglich, Hydraulikzylinder 19 vorgesehen (die während des Reaktorbetriebes entfernt werden; auf die Darstellung der Zuleitungen, Steuergeräte usw. wurde hier verzichtet). Über ein Gestänge 20 wird die durch den Pfeil in ihrer Richtung angedeutete Bewegung auf den Leitungsflansch 10 und damit auf die Leitung selbst übertragen, wobei der Verformungswiderstand der Faltenbalgkompensatoren 18 zu überwinden ist. Es wird so ein die Demontage bzw. Montage des Kernbehälters 3 erleichternder Spalt zwischen diesem und der Heißgasrohrleitung 7 geschaffen. Die Enden der Gestänge 20 sind als Zentrierstifte 21 ausgebildet, die bei der Wiedermontage durch Eingreifen in zu diesem Zweck im Behälterflansch 9 angebrachten Bohrungen den Leitungsflansch 10 auf diesen zentrieren und so die Einleitung des Zusammenschraubens der beiden Teile ermöglichen.

## Patentansprüche

1. Hochtemperatur-Kernreaktor mit mit einem Stutzen (8) versehenem äußerem Reaktordruckbehälter (2), der einen in einem Innenbehälter (3) angeordneten Reaktor (4) und eine im Stutzen an diesen Innenbehälter angeflanschte Heißgasrohrleitung (7) umfaßt, gekennzeichnet durch folgende Merkmale:

a) Die Heißgasrohrleitung (7) ist am Innenbehälter (3) mit von außerhalb des Außenbehälters (2) bzw. des Stutzens (8) lösbaren (12, 13) Schrauben (11) befestigt.

b) Es ist eine Vorrichtung (19) zum Aufbringen einer Kraft auf die Heißgasrohrleitung (7) vorhanden, die in Richtung auf eine Trennung der Leitung (7) weg vom Innenbehälter (3) wirkt.

2. Hochtemperatur-Kernreaktor nach Anspruch 1, gekennzeichnet durch folgendes Merkmal: Zwischen einem mit Gewindebohrungen versehenen Flansch (9) des Innenbehälters (3) und einem mit Durchgangslöchern versehenen Flansch (10) der Heißgasrohrleitung (7) ist um jede Schraube ein gegenüber letzterem Flansch axial federnd (15) angeordneter, mit zur Schraube passender Gewindebohrung versehener Ring (16) angeordnet.

## Claims

1. A high-temperature nuclear reactor having an outer reactor pressure container (2), provided with a connection piece (8), a reactor (4) arranged in an inner container (3), and a hot gas conduit (7) in the connection piece, flangedly connected to the inner container, characterised by the following features:

a) the hot gas conduit (7) is secured to the inner container (3) by means of bolts (11) which can be undone from outside the outer container (2) or the connection piece (8);

b) there is provided a device (19) for exerting a force on the hot gas conduit (7) which acts in the direction to separate the conduit (7) from the inner container (3).

2. A high-temperature nuclear reactor as claimed in claim 1, characterised by the following feature: between a flange (9) on the inner container (3), which is provided with threaded holes, and a flange (10) on the hot gas conduit (7), which is provided with through-holes, a ring (16) is arranged around each bolt, which ring is arranged to the axially springy (15), relative to the latter flange and is provided with a threaded hole fitting the bolt.

## Revendications

1. Réacteur nucléaire à haute température, comprenant une cuve extérieure (2) de réacteur, résistant à la pression, munie d'une tubulure (8), qui renferme un réacteur (4) disposé dans une cuve intérieure (3), et un conduit pour le gaz chaud (7) bridé dans la tubulure sur cette cuve intérieure, remarquable par les caractéristiques suivantes:

a) le conduit pour le gaz chaud (7) est fixé à la cuve intérieure (3) par des boulons (11) qui peuvent être desserrés (12, 13) de l'extérieur de la cuve extérieure (2) ou de la tubulure (8),

b) il est prévu un dispositif (19) pour appliquer sur le conduit pour le gaz chaud (7) une force qui agit dans le sens d'une séparation du conduit (7) l'éloignant de la cuve intérieure (3).

2. Réacteur nucléaire à haute température suivant la revendication 1, remarquable par la caractéristique suivante: entre une bride (9) de la cuve intérieure (3), qui est munie de perçages taraudés, et une bride (10) du conduit pour le gaz chaud (7), qui est munie de trous de passage, est disposé, autour de chaque boulon, un anneau (16) qui est monté élastiquement (15) du point de vue axial, par rapport à la bride nommée en dernier et qui est muni d'un perçage taraudé adapté ou boulon.

0 095 662

FIG 1

5

FIG 2

FIG 3